# EUROPÄISCHE PATENTSCHRIFT

(11) **EP 2 217 350 B1**
(45) Veröffentlichungstag und Bekanntmachung des Hinweises auf die Patenterteilung: **24.10.2012**
(21) Anmeldenummer: 08856811.8
(22) Anmeldetag: 04.12.2008
(51) Int. Cl.: B01D 46/52

(54) **FILTEREINRICHTUNG ZUR FILTRATION GASFÖRMIGER FLUIDE**
FILTER DEVICE FOR FILTERING GASEOUS FLUIDS
DISPOSITIF DE FILTRATION POUR FILTRER DES FLUIDES GAZEUX

(30) Priorität: 07.12.2007 US 12261
(43) Veröffentlichungstag der Anmeldung: 18.08.2010
(73) Patentinhaber: Mann + Hummel GmbH, 71638 Ludwigsburg (DE)
(72) Erfinder: PATEL, Ankur, River Edge New Jersey 07661 (US); DACKAM, Cedric, 91207 Lauf an der Pegnitz (DE)
(86) Internationale Anmeldenummer: PCT/EP2008/066822
(87) Internationale Veröffentlichungsnummer: WO 2009/071636

(56) Entgegenhaltungen:
- WO-A-97/40908
- DE-A1- 10 128 937
- US-A- 1 729 135
- US-A1- 2004 118 771

## Beschreibung

### Technisches Gebiet

Die Erfindung bezieht sich auf eine Filtereinrichtung zur Filtration gasförmiger Fluide, insbesondere auf Luftfilter in Brennkraftmaschinen, nach dem Oberbegriff des Anspruches 1.

### Stand der Technik

Ein Luftfilter wird in der EP 0 900 115 B1 beschrieben. Der Luftfilter umfasst ein Filterelement mit runder Querschnittsfläche, das eine spiralförmig aufgewickelte Filterbahn aufweist, wobei die Filterbahn aus einer gewellten und einer ebenen Lage zusammengesetzt ist, so dass zwischen gewellter und ebener Lage Strömungskanäle gebildet sind. Diese Strömungskanäle verlaufen im aufgewickelten Zustand des Filterelementes in Achsrichtung und dienen zur Einleitung bzw. Ableitung des zu reinigenden Fluids.

Die Strömungskanäle sind wechselseitig an den Stirnseiten offen bzw. geschlossen ausgeführt, so dass kein Strömungskanal axial durchgehend geöffnet und das an der Anströmseite in das Filterelement eingetretene Fluid gezwungen ist, radial durch die Wandungen der Strömungskanäle in benachbarte Kanäle auszuweichen, über die eine axiale Ableitung möglich ist. Das Verschließen der Strömungskanäle an den axialen Stirnseiten erfolgt mithilfe einer Klebstoffraupe.

Das Filterelement ist nach Art eines Kegelstumpfes gewickelt, indem die innen liegenden Wicklungen axial gegenüber den außen liegenden Wicklungen verschoben sind. Hierdurch ergibt sich sowohl an der Anströmseite als auch an der gegenüberliegenden Abströmseite des Filterelementes eine Kegelstumpfform, wobei die axiale Gesamtlänge durch die außen liegenden Wicklungen an der Anströmseite und die innen liegenden Wicklungen an der Abströmseite definiert ist. Durch die kegelstumpfförmige Form des Filterelementes sollen Druckvorteile erzielt werden können.

Der Erfindung liegt die Aufgabe zugrunde, mit einfachen konstruktiven Maßnahmen eine Filtereinrichtung zur Filtration gasförmiger Fluide anzugeben, die sich durch eine hohe Filtrationsleistung bei verbesserter Anpassung an den Einbauraum auszeichnet.

Diese Aufgabe wird erfindungsgemäß mit den Merkmalen des Anspruches 1 gelöst. Die Unteransprüche geben zweckmäßige Weiterbildungen an.

### Offenbarung der Erfindung

Die erfindungsgemäße Filtereinrichtung wird zur Filtration gasförmiger Fluide eingesetzt, insbesondere als Luftfilter zur Filtration der den Zylindern einer Brennkraftmaschine zuzuführenden Verbrennungsluft. Grundsätzlich kommen aber auch weitere Anwendungen in Betracht, beispielsweise die Filtration der dem Fahrzeuginnenraum zuzuführenden Luft.

Die Filtereinrichtung weist ein Filterelement mit einer spiralförmig gewickelten Filterbahn auf, welche parallel verlaufende Strömungskanäle für das zu reinigende Fluid aufweist. Als Filterbahn wird beispielsweise eine gewellte Filterlage eingesetzt, auf die eine ebene Filterlage aufgeklebt wird, wobei auf Grund der Wellenform Strömungskanäle gebildet sind. Durch das Aufwickeln der Filterbahn erhält man sowohl in Umfangsrichtung als auch in Radialrichtung eine Mehrzahl benachbart verlaufender und sich in Achsrichtung des Filterelementes erstreckender Strömungskanäle.

Die Strömungskanäle sind an gegenüberliegenden axialen Stirnseiten wechselseitig offen bzw. verschlossen ausgeführt, so dass kein Strömungskanal axial durchgehend ausgebildet ist, sondern vielmehr ein Teil der Strömungskanäle an der axialen Anströmseite geöffnet und an der gegenüberliegenden Abströmseite verschlossen und der andere Teil der Strömungskanäle an der Anströmseite geschlossen und an der axial gegenüberliegenden Abströmseite geöffnet ist. Dadurch ist das axial über die Anströmseite in das Filterelement eingeleitete Fluid gezwungen, innerhalb der Strömungskanäle die radialen Wandungen der Strömungskanäle zu durchdringen und in benachbarte Strömungskanäle auszuweichen, über die eine axiale Ableitung erfolgen kann.

Um eine bessere Anpassung an bauliche Gegebenheiten zu erreichen, so dass ein gegebener Einbauraum in bestmöglicher Weise von dem Filterelement ausgefüllt und dadurch eine höhere Filterfläche und damit einhergehender verbesserter Filtrationsleistung erzielt werden kann, ist das Filterelement so geformt, dass sämtliche Strömungskanäle an einer axialen Stirnseite des Filterelementes in einer gemeinsamen Stirnebene liegen und somit an der gleichen axialen Position enden. An der gegenüberliegenden axialen Stirnseite enden dagegen die Strömungskanäle an axial unterschiedlichen Positionen, wobei die maximale Erstreckung des Filterelementes sowohl durch radial innen liegende als auch radial außen liegende Wicklungen mit darin eingebrachten Strömungskanälen bestimmt sein kann. Auf diese Weise ist es möglich, eine Anpassung an die jeweils gegebenen Einbauverhältnisse vorzunehmen und den Einbauraum, der für das Filterelement zur Verfügung steht, in optimaler Weise auszunutzen. Erfindungsgemäß kann eine sich verjüngende Querschnittsform eines das Filterelement aufnehmenden Kanals durch eine konisch geformte Stirnseite des Filterelementes ausgefüllt werden.

Der ebene Abschluss der Strömungskanäle an der Stirnseite des Filterelementes ist zweckmäßig. Generell sind an den gegenüberliegenden Stirnseiten unterschiedliche Geometrien ausgebildet.

So können an der einen Stirnseite des Filterelementes konusförmige Geometrien verwendet werden. Diese können sowohl mit geradlinigen Seitenflächen als auch mit gekrümmten Seitenflächen, vorzugsweise konvex gekrümmten Seitenflächen ausgebildet sein. In Betracht kommen aber auch Geometrien, bei denen in Radialrichtung gesehen verschiedene Wicklungen der Filterbahn eine unterschiedliche axiale Erstreckung aufweisen, wobei in Radialrichtung ein mehrfaches Ansteigen und Absteigen in der axialen Erstreckung möglich ist, so dass sich in Radialrichtung eine Wellenform ergibt.

Gemäß bevorzugter Ausführung ist die Filterbahn mit nicht gewickelten, eben ausgebreiteten Zustand als Trapez, insbesondere als schiefwinkliges Trapez mit parallelen, jedoch ungleich langen Endkanten ausgebildet, wobei die Endkanten den Wickelanfang bzw. das Wickelende des Filterelements darstellen. Die Strömungskanäle verlaufen parallel zu den Endkanten. Auf Grund der unterschiedlich lang ausgeführten Endkanten ergibt sich beim Wickeln je nach Gestalt der die Endkanten verbindenden Seitenkanten eine unterschiedliche Gesamtgeometrie des Filterelementes.

In bevorzugter Ausführung liegt eine erste Seitenkante in einem 90°-Winkel zu beiden Endkanten, wohingegen die gegenüberliegende Seitenkante unter einem von 90° abweichenden Winkel mit den beiden Endkanten verbunden ist. Die erste, im 90°-Winkel angeordnete Seitenkante stellt sicher, dass das Filterelement an seiner einen Stirnseite mit in einer gemeinsamen Stirnebene endenden Strömungskanälen ausgebildet ist. Die demgegenüber schräg verlaufende, zweite Seitenkante ermöglicht dagegen eine konische Form der gegenüberliegenden Stirnseite, wobei je nach Wickelrichtung der Konus nach innen oder nach außen gewölbt ist. Beginnt man mit dem Wickeln an der längeren Endkante, so ergibt sich ein nach außen gewölbter Konus, dessen Seitenkanten axial nach außen spitz zulaufen. Beginnt man dagegen mit dem Wickeln an der kürzeren Endkante, so stellt sich ein nach innen gewölbter Konus ein, dergestalt, dass die Seitenkanten des Konus sich radial von außen nach innen und axial in Richtung des Inneren des Filterelementes erstrecken.

Alternativ zu einer geradlinigen Seitenkante, welche winklig zu den Endkanten liegt, kann auch eine gekrümmte Seitenkante gewählt werden, wodurch konkav geschwungene konusförmige Geometrien an einer Stirnseite erreicht werden.

Um die Strömungskanäle an den axialen Stirnseiten zu verschließen, wird zweckmäßigerweise eine Klebstoffraupe auf die Filterbahn entlang jeder Seitenkante aufgebracht. Damit die Strömungskanäle wechselseitig offen bzw. verschlossen sind, ist es hierbei zweckmäßig, die Klebstoffraupe an unterschiedlichen Seiten der Filterbahn aufzubringen, so dass jeder Strömungskanal nur an jeweils einer Stirnseite verschlossen und die gegenüberliegende Stirnseite offen ist. Außerdem wird hierdurch die wechselseitige Öffnung bzw. Verschließung der Strömungskanäle erreicht, so dass an jeder axialen Stirnseite des Filterelementes ein Teil der Strömungskanäle offen und ein Teil der Strömungskanäle geschlossen ausgebildet ist.

Die Filterbahn ist vorzugsweise als gewellte Filterlage ausgebildet, wobei die Strömungskanäle auf Grund der Wellenform in Achsrichtung des gewickelten Filterelementes verlaufen. Es kann zweckmäßig sein, die gewellte Filterlage auf eine ebene Filterlage aufzusetzen und mit dieser zu verbinden, wobei sowohl auf der der ebenen Filterlage zugewandten Seite als auch auf der der ebenen Filterlage abgewandten Seite der gewellten Filterlage jeweils axial verlaufende Strömungskanäle gebildet sind, die durch entsprechende Verklebungsmaßnahmen wechselseitig zu öffnen bzw. zu schließen sind.

Die Filtereinrichtung ist in ihrer Ausführung als Luftfilter für Brennkraftmaschinen in ein Ansaugmodul der Brennkraftmaschine eingesetzt, welches Bestandteil des Ansaugtraktes ist. Der Ansaugkanal in dem Ansaugmodul, über den die Verbrennungsluft den Zylindern der Brennkraftmaschine zuzuführen ist, weist hierbei zweckmäßigerweise einen nicht-konstanten Querschnitt auf, an den die Geometrie des Filterelementes durch eine entsprechende Gestaltung der Seitenkanten der eben ausgebreiteten Filterbahn angepasst werden kann.

Bei einem Verfahren zur Herstellung einer Filtereinrichtung zur Filtration gasförmiger Fluide wird während des Wickelvorganges jeweils eine Klebstoffraupe entlang der beiden Seitenkanten der Filterbahn aufgebracht. Dies erfolgt beispielsweise unter Zuhilfenahme eines Klebekopfes, der oberhalb der zu verklebenden und aufzuwickelnden Filterbahn mitbewegt wird, und zwar mit einer der Aufwickelgeschwindigkeit entsprechenden Vorschubgeschwindigkeit.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 das gewickelte Filterelement im Längsschnitt mit einer Mehrzahl von Strömungskanälen für das zu reinigende Fluid, wobei die Strömungskanäle an gegenüberliegenden axialen Stirnseiten wechselseitig offen bzw. verschlossen sind,

Fig. 2 die Filterbahn, aus der das Filterelement durch Wickeln gebildet wird, im ebenen, ausgebreiteten Zustand, wobei die Filterbahn trapezförmig ausgeführt ist,

Fig. 3 eine Schnittdarstellung gemäß Schnittlinie III-III aus Fig. 2 mit einer aus einer gewellten und einer ebenen Lage bestehenden Filterbahn,

Fig. 4 eine Schnittdarstellung gemäß Schnittlinie IV-IV aus Fig. 2 mit einer Fig. 3 entsprechende Darstellung, jedoch mit mittels Klebstoff verschlossenen Strömungskanälen,

Fig. 5 eine Fig. 2 entsprechende Darstellung einer eben ausgebreiteten, trapezförmigen Filterbahn, mit einer zusätzlich einzubringenden Klebstoffraupe entlang der winklig geformten Seitenkante der Filterbahn,

Fig. 6 das Filterelement im gewickelten Zustand,

Fig. 7 das Filterelement in einer Ansicht von oben,

Fig. 8 das Filterelement in einer Ansicht von unten,

Fig. 9 das gewickelte Filterelement in einer weiteren Ansicht mit eingetragenen Strömungspfeilen,

Fig. 10 das gewickelte Filterelement mit in Gegenrichtung geführter Durchströmung,

Fig. 11 einen Schnitt gemäß Schnittlinie XI-XI aus Fig. 9 mit einer Darstellung des Strömungsübertritts zwischen benachbarten Strömungskanälen,

Fig. 12 einen Schnitt gemäß Schnittlinie XII-XII aus Fig. 10,

Fig. 13 in schematischer Darstellung ein Ansaugkanal einer Brennkraftmaschine, welcher sich in Richtung der Brennkraftmaschine verjüngt, mit integriertem Filterelement in herkömmlicher Bauweise,

Fig. 14 eine Fig. 13 entsprechende Darstellung, jedoch mit dem erfindungsgemäßen Filterelement.

In den Figuren sind gleiche Bauteile mit gleichen Bezugszeichen versehen.

### Ausführungsformen der Erfindung

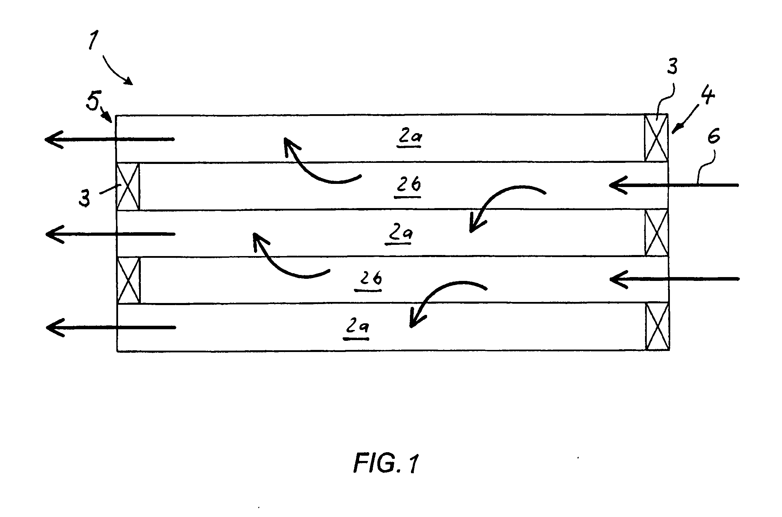

Das in Fig. 1 dargestellte Filterelement 1 gehört an sich zum Stand der Technik und wird zur Erläuterung der grundsätzlichen Funktionsweise herangezogen. Das Filterelement 1 ist als Wickelkörper ausgebildet, der in Achsrichtung von dem zu filtrierenden Fluid, insbesondere Verbrennungsluft, zu durchströmen ist. Hierzu sind in dem Filterelement 1 in Achsrichtung verlaufende Strömungskanäle 2a, 2b gebildet, die wechselseitig an den axialen Stirnseiten offen bzw. verschlossen ausgebildet sind. Jeder Strömungskanal ist nur an einer der Stirnseiten offen und an der gegenüberliegenden Stirnseite geschlossen. An der Anströmseite 4, über die das zu reinigende Fluid in Durchströmrichtung 6 eintritt, ist ein Teil der Strömungskanäle verschlossen, und zwar mittels eines Klebstoffes 3, der an der axialen Anströmseite 4 in den Strömungskanälen 2a angeordnet ist. Die Strömungskanäle 2b sind dagegen an der axialen Anströmseite 4 geöffnet.

An der Abströmseite 5 sind die Strömungskanäle 2a geöffnet, so dass über diese Strömungskanäle 2a das gereinigte Fluid abströmen kann. Dagegen sind die Strömungskanäle 2b, über die das Fluid in das Filterelement 1 eingeführt wird, an der Abströmseite 5 mittels Klebstoffes 3 verschlossen.

Das über die anströmseitig geöffneten Strömungskanäle 2b in Pfeilrichtung 6 eingeführte Fluid ist auf Grund des Verschlusses an der Abströmseite 5 gezwungen, die Wandungen der Strömungskanäle radial zu durchdringen und in die benachbarten Strömungskanäle 2a auszuweichen, die abströmseitig geöffnet sind. Über diese Strömungskanäle 2a erfolgt die axiale Ableitung des gereinigten Fluids.

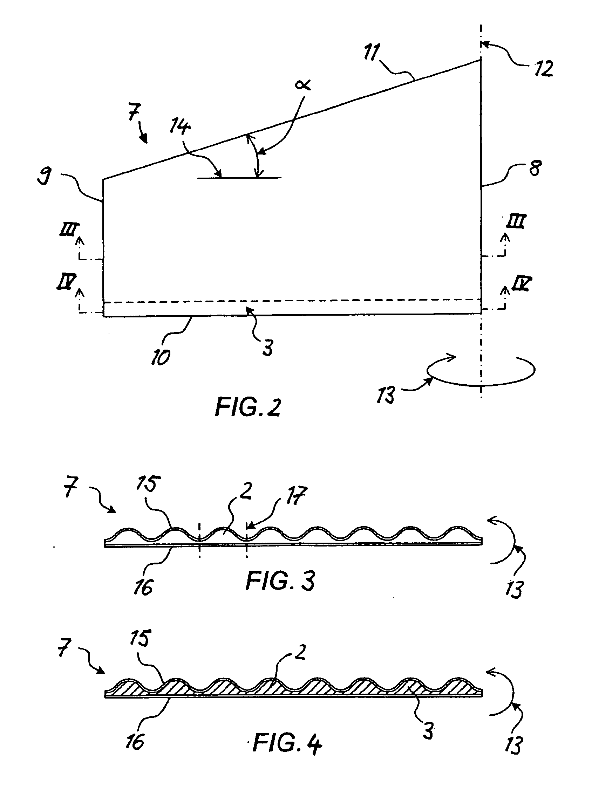

In Fig. 2 ist eine Filterbahn 7 im eben ausgebreiteten Zustand dargestellt. Das Filterelement wird durch Aufwickeln der Filterbahn 7 um die Achse 12 in Pfeilrichtung 13 hergestellt. Die Achse 12 liegt hierbei im eben ausgebreiteten Zustand der Filterbahn 7 und zu Beginn des Wickelvorgangs an einer Endkante 8 der Filterbahn 7.

Die Filterbahn 7 weist im ausgebreiteten Zustand eine trapezförmige Gestalt auf und ist mit zwei axial gegenüberliegenden, zueinander parallelen und mit unterschiedlicher Länge versehenen Endkanten 8 und 9 versehen, die an ihren Endpunkten über Seitenkanten 10 und 11 verbunden sind. Die erste Seitenkante 10 schließt mit den beiden Endkanten 8 und 9 jeweils einen rechten Winkel ein. Die zweite Seitenkante 11 ist dagegen winklig ausgerichtet, die Seitenkante 11 schließt mit einer Orthogonalen 14, welche senkrecht zu den Endkanten 8 und 9 steht, einen Winkel α ein, der größer als 0° und kleiner als 90° ist. Im Ausführungsbeispiel beträgt der Winkel α etwa 20°.

Wie mit Pfeilrichtung 13 und der Achse 12 angedeutet, beginnt der Wickelvorgang an der längeren Endkante 8 und wird in Richtung der gegenüberliegenden, kürzeren Endkante 9 fortgesetzt. Auf diese Weise erhält man im fertig gewickelten Zustand ein Filterelement, das im Bereich der schiefwinkligen Seitenkante 11 eine konusförmige Gestalt besitzt. Die gegenüberliegende Stirnseite des Filterelementes ist dagegen auf Grund der rechtwinkligen Ausrichtung der ersten Seitenkante 10 bezogen auf die Endkanten 8 und 9 zylindrisch ausgebildet. Die Zylinderform des fertig gewickelten Filterelementes erstreckt sich in Achsrichtung des Filterelementes gesehen über die Länge der kürzeren Endkante 9. Daran schließt sich im Bereich der schiefwinkligen Seitenkante 11 der konusförmige Abschnitt an, dessen axiale Länge der Differenz zwischen der Länge von der längeren Endkante 8 und der kürzeren Endkante 9 entspricht.

Wie der Darstellung gemäß Fig. 3 zu entnehmen, besteht die Filterbahn 7 aus einer gewellten Filterlage 15 und einer ebenen Filterlage 16, wobei die gewellte Filterlage 15 und die ebene Filterlage 16 miteinander verbunden sind, insbesondere durch Verkleben. Auf Grund der Wellenform der Filterlage 15 sind zwischen den beiden Filterlagen 15 und 16 Strömungskanäle 2 gebildet, wobei sich jeder Strömungskanal 2 zwischen einem Wellenberg und den jeweils benachbarten Wellentälern 17 erstreckt. Im fertig montierten Zustand sind benachbarte Strömungskanäle 2 in Radialrichtung durch die Wandung, gebildet durch das Material der gewellten Filterlage 15, voneinander separiert. Die Wandung ist gasdurchlässig, um einen Gasdurchtritt zwischen benachbarten Strömungskanälen 2 zu ermöglichen.

In Fig. 4, die einen Schnitt gemäß Schnittlinie IV-IV aus Fig. 2 darstellt, sind im Bereich der der Seitenkante 10 benachbarten axialen Stirnseite die Strömungskanäle 2 von Klebstoff 3 verschlossen. Der Klebstoff 3 wird insbesondere in Form einer Klebstoffraupe über die Länge der Seitenkante 10 eingebracht.

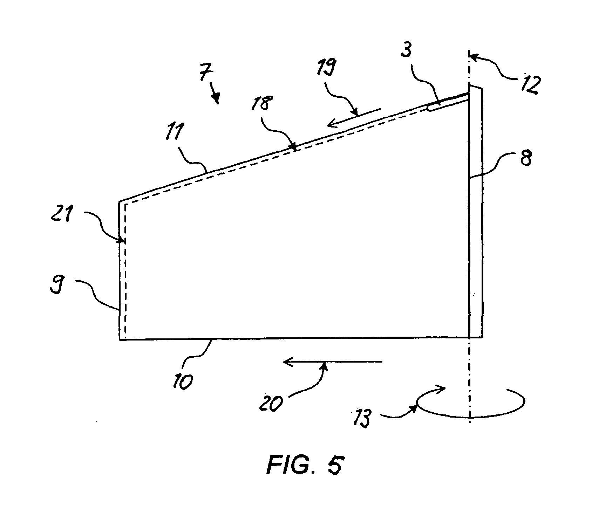

In Fig. 5 ist die Filterbahn 7 zu Beginn des Aufwickelvorganges dargestellt, bei der die längere Endkante 8 bereits geringfügig in Pfeilrichtung 13 um die Achse 12 aufgewickelt worden ist. Zeitgleich mit dem Aufwickelvorgang, der in Vorschubrichtung 20 zwischen der ersten Endkante 8 und der zweiten Endkante 9 erfolgt, wird mithilfe eines Klebekopfes eine Klebstoffraupe 3 entlang der schiefwinkligen Seitenkante 11 in Pfeilrichtung 19 aufgebracht, wobei die Pfeilrichtung 19 parallel zur Seitenkante 11 und damit ebenfalls schiefwinklig bezogen auf die Endkanten 8 und 9 verläuft. Die Kleberaupe 3 wird entlang eines Pfades 18 eingebracht, der sich unmittelbar an der Außenseite der Seitenkante 11 befindet.

Auch entlang der kürzeren Endkante 9 wird entlang eines parallel zur Au-βenseite der Endkante 9 verlaufenden Pfades 21 Klebstoff eingebracht.

Die Klebstoffraupen 3 entlang der ersten, orthogonalen Seitenkante 10 (Fig. 2) und der zweiten, schiefwinkligen Seitenkante 3 (Fig. 5) werden vorzugsweise auf unterschiedlichen Seitenflächen der Filterbahn 7 aufgebracht.

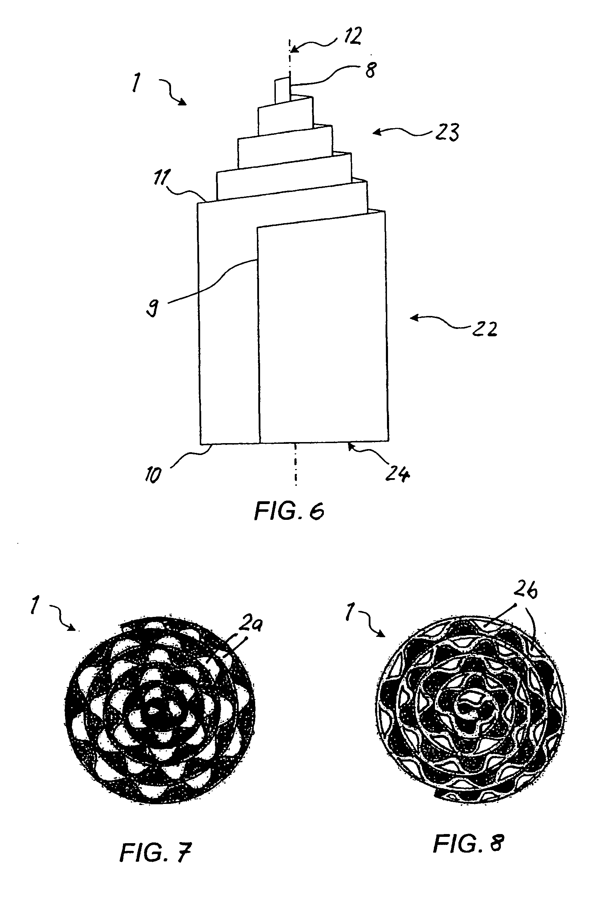

In Fig. 6 ist das fertig gewickelte Filterelement 1 dargestellt. Auf Grund der schräg verlaufenden Seitenkante 11 sowie der Tatsache, dass der Wickelvorgang mit der längeren Endkante 8 begonnen wurde, ergibt sich im fertig gewickelten Zustand ein Filterelement mit einem zylindrischen Abschnitt 22 und einem konusförmigen Abschnitt 23. Der zylindrische Abschnitt 22 weist eine Stirnseite 24 auf, in der die in Achsrichtung 12 verlaufenden Strömungskanäle alle gemeinsam enden. Im gegenüberliegenden konusförmigen Abschnitt 23 dagegen enden die Strömungskanäle je nach radialer Position der Strömungskanäle in unterschiedlichen axialen Abständen.

In Fig. 7 ist das fertig gewickelte Filterelement in Draufsicht dargestellt. Zu erkennen ist, dass die Strömungskanäle 2a im Bereich des konusförmigen Abschnittes 23 geöffnet sind. In Fig. 8 ist dagegen das Filterelement 1 von unten dargestellt, hier sind die Strömungskanäle 2b offen ausgebildet. Sowohl im Bereich des konusförmigen Abschnittes als auch im Bereich des zylindrischen Abschnittes sind die Stirnseiten unmittelbar benachbarter Strömungskanäle wechselseitig offen bzw. geschlossen ausgebildet.

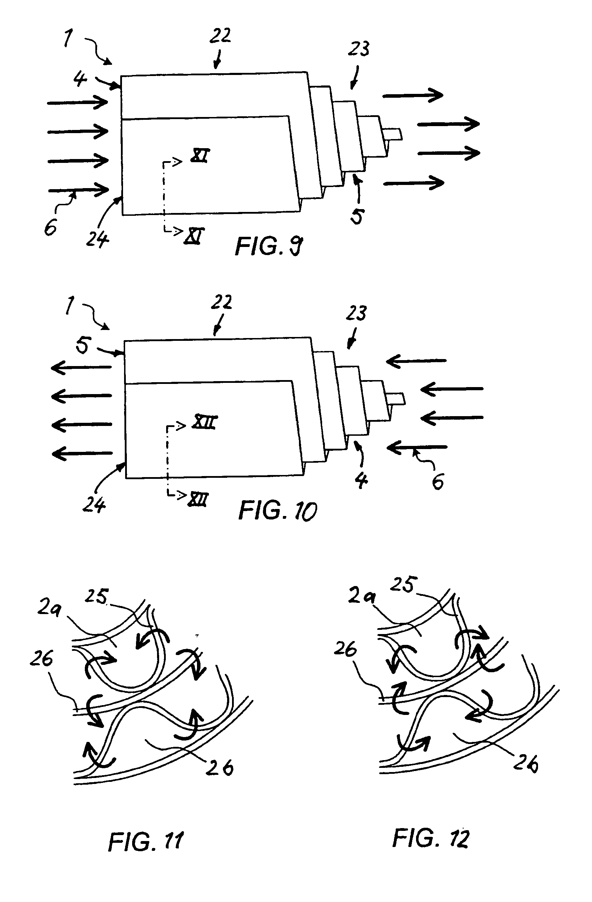

In Fig. 9 ist das fertig gewickelte Filterelement 1 mit dem zylindrischen Abschnitt 22 und dem konusförmigen Abschnitt 23 mit den die Durchströmungsrichtung 6 angebenden Strömungspfeilen dargestellt. Die Anströmseite 4 fällt mit der Stirnseite 24 am zylindrischen Abschnitt 22 zusammen. Die Durchströmung erfolgt axial, das gereinigte Fluid tritt im Bereich des konusförmigen Abschnittes 23, an dem sich die Abströmseite 5 befindet, aus dem Filterelement 1 aus.

In Fig. 10 sind die Strömungsverhältnisse umgekehrt eingetragen, die Durchströmrichtung 6 erfolgt vom konusförmigen Abschnitt 23, an dem die Anströmseite 4 gebildet ist, über den zylindrischen Abschnitt 22. Die Abströmseite 5 fällt mit der Stirnseite 24 des zylindrischen Abschnittes 22 zusammen.

Wie Fig. 11 zu entnehmen, die einen Schnitt gemäß Schnittlinie XI-XI aus Fig. 9 darstellt, strömt das Fluid in das Filterelement über die an der Anströmseite geöffneten Strömungskanäle 2b ein und tritt innerhalb des Filterelementes durch Wandungen 25 und 26, die die Strömungskanäle 2b begrenzen, in die benachbarten Strömungskanäle 2a über, über die die axiale Ableitung des gereinigten Fluids erfolgt. Beim Übertritt durch die Wandungen 25, 26 wird das Fluid gereinigt.

In Fig. 12 ist ein Schnitt gemäß Schnittlinie XII-XII aus Fig. 10 dargestellt. In diesem Ausführungsbeispiel erfolgt im Vergleich zum vorangegangenen Ausführungsbeispiel die Anströmung des Filterelementes in Gegenrichtung. Dementsprechend wird das ungereinigte Fluid in die Strömungskanäle 2a eingeführt und tritt radial die Wandungen 25, 26 hindurch, wobei während dieses Vorganges das Fluid gereinigt wird. Das Fluid gelangt daraufhin in die parallel verlaufenden Strömungskanäle 2b, über die das gereinigte Fluid axial abgeleitet wird.

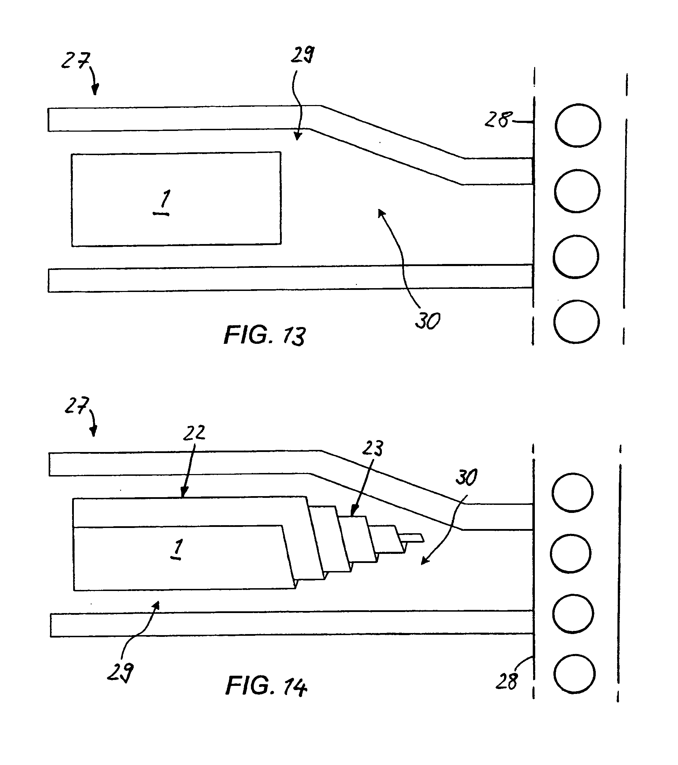

In Fig. 13 ist ein Ansaugmodul 27, welches einer Brennkraftmaschine 28 zugeordnet ist und über das der Brennkraftmaschine Verbrennungsluft zuzuführen ist, mit einem in herkömmlicher Weise ausgeführten Filterelement 1 dargestellt, welches in einem Ansaugkanal 29 des Ansaugmoduls angeordnet ist. Das Filterelement 1 weist Zylinderform auf und wird in Achsrichtung von der herangeführten Verbrennungsluft durchströmt. Der Ansaugkanal 29 besitzt stromab des Filterelementes 1 auf der der Brennkraftmaschine 28 zugewandten Seite einen sich verjüngenden Abschnitt 30 mit reduziertem Querschnitt. Das Filterelement 1 ist diesem Abschnitt 30 mit reduziertem Querschnitt vorgelagert.

Im Ausführungsbeispiel gemäß Fig. 14 ist dagegen ein Ansaugmodul 27 mit einem Filterelement 1 gemäß der Erfindung dargestellt, dessen zylindrischer Abschnitt 22 im zylinderförmigen Teil des Ansaugkanals 29 liegt und dessen konusförmiger Abschnitt 23 in den Abschnitt 30 mit reduziertem Querschnitt einragt. Es ist ersichtlich, dass der im Ansaugkanal befindliche Bauraum zur Aufnahme des Filterelementes 1 im Ausführungsbeispiel gemäß Fig. 14 trotz des im Abschnitt 30 reduzierten Querschnittes besser ausgenutzt wird. Auf diese Weise kann bei gleichem Einbauraum ein Filterelement 1 mit vergrößerter Filterfläche eingesetzt werden.

## Patentansprüche

1. Filtereinrichtung zur Filtration gasförmiger Fluide, insbesondere Luftfilter in Brennkraftmaschinen (28), mit einem Filterelement (1), das eine spiralförmig gewickelte Filterbahn aufweist, welche mit parallel verlaufenden Strömungskanälen (2a, 2b) für das Fluid versehen ist, wobei benachbarte Strömungskanäle (2a, 2b) an gegenüberliegenden axialen Stirnseiten wechselseitig offen bzw. verschlossen sind, wobei die Strömungskanäle (2a, 2b) im gewickelten Zustand an einer axialen Stirnseite des Filterelements (1) an axial unterschiedlichen Positionen enden und das Filterelement (1) an der zweiten, gegenüberliegenden axialen Stirnseite mit einer von der ersten Stirnseite abweichenden Geometrie versehen ist **dadurch gekennzeichnet, dass** sämtliche Strömungskanäle (2a, 2b) an der zweiten, gegenüberliegenden Stirnseite des Filterelements in einer gemeinsamen Stirnebene liegend an axial gleichen Positionen enden und die Stirnseite mit den an gleicher axialer Position endenden Strömungskanälen die Anströmseite (4) und die gegenüberliegende Stirnseite die Abströmseite (5) bildet, wobei die Abströmseite (5) eine nach außen gerichtete, konische Form aufweist.

2. Filtereinrichtung nach Anspruch 1, **dadurch gekennzeichnet, dass** die Filterbahn (7) im nicht-gewickelten, eben ausgebreiteten Zustand als Trapez mit parallelen, jedoch ungleich langen Endkanten (8, 9) ausgebildet ist, wobei die Endkanten (8, 9) den Wickelanfang bzw. das Wickelende des Filterelements (1) darstellen.

3. Filtereinrichtung nach Anspruch 2, **dadurch gekennzeichnet, dass** die sich gegenüberliegenden Endkanten (8, 9) an einem ihrer Endpunkte über eine erste, geradlinige Seitenkante (10) miteinander verbunden sind, die rechtwinklig zu den beiden Endkanten (8, 9) verläuft.

4. Filtereinrichtung nach Anspruch 1 oder 2, **dadurch gekennzeichnet, dass** die Endkanten (8, 9) an ihrer gegenüberliegenden Endpunkten über eine zweite, geradlinige Seitenkante (11) miteinander verbunden sind, die winklig, jedoch nicht-orthogonal zu den beiden Endkanten (8, 9) verläuft.

5. Filtereinrichtung nach Anspruch 1 oder 2, **dadurch gekennzeichnet, dass** die zweite Seitenkante (11) zwischen den Endkanten (8, 9) gekrümmt ausgebildet ist.

6. Filtereinrichtung nach einem der Ansprüche 1 bis 5, **dadurch gekennzeichnet, dass** die Stirnseite des Filterelements (1), an der die Strömungskanäle (2a, 2b) im gewickelten Zustand an axial unterschiedlichen Positionen enden, Konusform aufweist.

7. Filtereinrichtung nach einem der Ansprüche 1 bis 6, **dadurch gekennzeichnet, dass** entlang der Seitenkanten (10, 11) jeweils eine Klebstoffraupe (3) auf die Filterbahn (7) aufgebracht ist.

8. Filtereinrichtung nach einem der Ansprüche 1 bis 7, **dadurch gekennzeichnet, dass** die Filterbahn (7) als gewellte Filterlage (15) ausgeführt ist.

9. Ansaugmodul in einer Brennkraftmaschine mit einer Filtereinrichtung nach einem der Ansprüche 1 bis 8, wobei die Filtereinrichtung in einem Ansaugkanal (29) mit einem nicht-konstanten Querschnitt angeordnet ist.

10. Verfahren zur Herstellung einer Filtereinrichtung nach einem der Ansprüche 1 bis 9, bei dem während des Wickelvorganges jeweils eine Klebstoffraupe (3) entlang der beiden Seitenkanten (10, 11) der Filterbahn (7) aufgebracht wird.

11. Verfahren nach Anspruch 12, **dadurch gekennzeichnet, dass** die Klebstoffraupen (3) mithilfe eines oberhalb des ebenen Abschnittes der Filterbahn (7) mitbewegten Klebekopfes aufgebracht werden.

## Claims

1. Filtering device for filtering gaseous fluids, in particular air filters in internal combustion engines (28), with a filter element (1) that features a spirally wound filter web which is provided with parallel running flow channels (2a, 2b) for the fluid, adjacent flow channels (2a, 2b) on oppositely positioned axial end faces being alternately opened and closed, respectively, the flow channels (2a, 2b) ending in wound state on an axial end face of the filter element (1) at axially different positions and the filter element (1) being provided on the second opposite axial end face with a geometry different from the first end face, **characterized in that** all flow channels (2a, 2b) on the second opposite end face of the filter element lying on a common face plane end at axially identical positions and that the end face with the flow channels ending at the same axial position forms the inflow side (4) and the opposite end face the outflow side (5), the outflow side' (5) featuring an outwardly directed conical shape.

2. Filtering device according to claim 1, **characterized in that** the filter web (7) in non-wound, flat spread state is designed as trapezoid with parallel end edges (8, 9), however of unequal length, the end edges (8, 9) representing the winding start and the winding end, respectively, of the filter element (1).

3. Filtering device according to claim 2, **characterized in that** the oppositely positioned end edges (8, 9) are connected with each other at one of their endpoints via a first straight lateral edge (10) that runs at right angle in relation to both end edges (8, 9).

4. Filtering device according to claim 1 or 2, **characterized in that** the end edges (8, 9) are connected with each other at their opposite endpoints via a second straight lateral edge (11) that runs at an angle, but non-orthogonally in relation to both end edges (8, 9).

5. Filtering device according to claim 1 or 2, **characterized in that** the second lateral edge (11) has a curved shape between the end edges (8, 9).

6. Filtering device according to one of the claims 1 to 5, **characterized in that** the end face of the filter element (1) on which the flow channels (2a, 2b) in wound state end at axially different positions feature a conical shape.

7. Filtering device according to one of the claims 1 to 6, **characterized in that** along the lateral edges (10, 11) each an adhesive bead (3) is applied to the filter web (7).

8. Filtering device according to one of the claims 1 to 7, **characterized in that** the filter web (7) is designed as wavy filter layer (15).

9. Intake module of an internal combustion engine with a filtering device according to one of the claims 1 to 8, the filtering device being disposed in an intake port (29) having an inconstant cross-section.

10. Method for manufacturing a filtering device according to one of the claims 1 to 9, according which an adhesive bead (3) each is applied along both lateral edges (10, 11) of the filter web (7) during the winding process.

11. Method according to claim 12, **characterized in that** the adhesive sealing beads (3) are applied by means of a moving glue head above the plane section of the filter web (7).

## Revendications

1. Dispositif de filtration destiné à la filtration de fluides gazeux, notamment filtre à air dans des moteurs à combustion interne (28), avec un élément filtrant (1) qui est pourvu d'une bande filtrante enroulée en forme de spirale et dotée de canaux d'écoulement (2a, 2b) parallèles pour le fluide, des canaux d'écoulement (2a, 2b) voisins situés sur des faces frontales axiales opposées étant en alternance ouverts et/ou fermés, les canaux d'écoulement (2a, 2b) prenant fin, en position enroulée, à des positions axialement différentes sur une face frontale axiale de l'élément filtrant (1) et l'élément filtrant (1) présentant, sur la deuxième face frontale axiale opposée, une géométrie différente de celle de la première face frontale, **caractérisé en ce que** tous les canaux d'écoulement (2a, 2b) prennent fin à des positions axiales identiques sur la deuxième face frontale opposée de l'élément filtrant, sur un plan frontal commun, et que la face frontale avec les canaux d'écoulement se terminant à la même position axiale représente le côté d'entrée (4) et la face frontale opposée représente le côté de sortie (5), le côté de sortie (5) ayant une forme conique orientée vers l'extérieur.

2. Dispositif de filtration selon la revendication 1, **caractérisé en ce que** la bande filtrante (7) est exécutée, en position non enroulée et étalée à plat, en tant que trapèze avec des arêtes finales (8, 9) parallèles mais de longueurs différentes, les arêtes finales (8, 9) représentant le début de la bobine et/ou la fin de la bobine de l'élément filtrant (1).

3. Dispositif de filtration selon la revendication 2, **caractérisé en ce que** les arêtes finales (8, 9) opposées sont reliées, à l'un de leurs points finaux, par une première arête latérale (10) rectiligne qui est perpendiculaire aux deux arêtes finales (8, 9).

4. Dispositif de filtration selon la revendication 1 ou 2, **caractérisé en ce que** les arêtes finales (8, 9) sont reliées, à leurs points finaux opposés, par une deuxième arête latérale (11) rectiligne qui n'est cependant pas orthogonale aux deux arêtes finales (8, 9).

5. Dispositif de filtration selon la revendication 1 ou 2, **caractérisé en ce que** la deuxième arête latérale (11) est réalisée en forme curviligne entre les arêtes finales (8, 9).

6. Dispositif de filtration selon l'une des revendications 1 à 5, **caractérisé en ce que** la face frontale de l'élément filtrant (1) sur laquelle les canaux d'écoulement (2a, 2b) prennent fin, en position enroulée, à des positions axialement différentes a une forme conique.

7. Dispositif de filtration selon l'une des revendications 1 à 6, **caractérisé en ce qu'**un cordon de colle (3) est appliqué sur la bande filtrante (7) le long de chacune des arêtes latérales (10, 11).

8. Dispositif de filtration selon l'une des revendications 1 à 7, **caractérisé en ce que** la bande filtrante (7) est exécutée en tant que couche filtrante (15) ondulée.

9. Module d'aspiration dans un moteur à combustion interne avec un dispositif de filtration selon l'une des revendications 1 à 8, le dispositif de filtration étant disposé dans un canal d'aspiration (29) présentant une section non constante.

10. Procédé de fabrication d'un dispositif de filtration selon l'une des revendications 1 à 9 selon lequel un cordon de colle (3) est appliqué le long de chacune des deux arêtes latérales (10, 11) de la bande filtrante (7) pendant l'opération d'enroulement.

11. Procédé selon la revendication 12, **caractérisé en ce que** les cordons de colle (3) sont appliqués au moyen d'une tête d'encollage mobile placée au-dessus de la section plane de la bande filtrante (7).
